# EUROPÄISCHE PATENTSCHRIFT

(11) **EP 3 921 125 B1**
(45) Veröffentlichungstag und Bekanntmachung des Hinweises auf die Patenterteilung: **27.03.2024**
(21) Anmeldenummer: 20704465.2
(22) Anmeldetag: 04.02.2020
(51) Int. Cl.: B25J 19/06

(54) **ROBOTER MIT WENIGSTENS EINER ABDECKUNG UND WENIGSTENS EINEM KONTAKTSENSOR**
ROBOT HAVING AT LEAST ONE COVERING AND AT LEAST ONE CONTACT SENSOR
ROBOT DOTÉ D'AU MOINS UN ÉLÉMENT DE COUVERTURE ET D'AU MOINS UN CAPTEUR DE CONTACT

(30) Priorität: 06.02.2019 DE 102019201516
(43) Veröffentlichungstag der Anmeldung: 15.12.2021
(73) Patentinhaber: KUKA Deutschland GmbH, 86165 Augsburg (DE)
(72) Erfinder: WUENSCH, Markus, 86153 Augsburg (DE); ZUMPE, Veronika, 86167 Augsburg (DE)
(74) Vertreter: Oelke, Jochen
(86) Internationale Anmeldenummer: PCT/EP2020/052741
(87) Internationale Veröffentlichungsnummer: WO 2020/161129

(56) Entgegenhaltungen:
- WO-A1-2018/079772
- DE-A1- 19 540 202
- DE-B3- 10 322 866
- DE-B3-102015 200 355
- JP-A- S6 016 394

## Beschreibung

Die Erfindung betrifft einen Roboter mit einem Roboterarm, aufweisend mehrere motorisch angetriebene Gelenke und mehrere Glieder, die jeweils zwei benachbarte Gelenke dieser angetriebenen Gelenke miteinander verbinden, wobei mindestens eines dieser Glieder ein tragendes Strukturbauteil aufweist, das ausgebildet ist zur Übertragung von Kräften und/oder Momenten von einem benachbarten Gelenk zu dem anderen benachbarten Gelenk, wobei das Strukturbauteil mit wenigstens einer das Strukturbauteil zumindest teilweise überdeckenden Abdeckung und wenigstens einem Kontaktsensor versehen ist.

Die EP 3 246 137 A1 beschreibt einen Roboter und speziell ein Strukturbauteil, das von einer Abdeckung abgedeckt ist, wobei zwischen dem Strukturbauteil und der Abdeckung mehrere Verformungslagen, sowie ein kapazitiver Sensor und ein Piezosensor in einer Sandwichbauweise untergebracht sind.

Die WO 2018/079772 A1 zeigt einen Roboterarm mit mehreren Gliederteilen, welche durch mehrere Gelenkverbindungsteile miteinander verbunden sind, wobei die mehreren Teile mit Abdeckungen abgedeckt sind. Die Abdeckungen weisen beispielsweise Kontaktsensoren auf.

Die DE 10 2015 200355 B3 beschreibt eine medizinische roboterartige Vorrichtung mit einer Kollisionskontrolle, wobei ein Roboterarm der Vorrichtung einen Kontaktsensor aufweist.

Die DE 103 22 866 B3 zeigt, einen Sicherheitsleiste für eine Stoß- oder Schließkantensicherung, bei welcher die Kontaktelemente quer zur Längserstreckung der Aufnahmekörper angeordnet sind und über ihre Kontaktstellen einen Stromfluss von der einen Seite eines Aufnahmekörpers zur anderen Seite des anderen Aufnahmekörpers ermöglichen.

Die DE 195 40 202 A1 beschreibt, einen Stromunterbrecher für einen elektrischen Stromkreis, dem eine elektrisch leitende Druckfeder Teil des Stromkreises ist, die mittels Kontaktplatten mit Kontakten des Stromleiters in Verbindung steht und wobei deren durch ein Betätigungsteil verursachte Kippbewegung zur Unterbrechung des Stromkreises führt.

Die JP S60 16394 A zeigt, einen Kontaktsensor für einen Roboter.

Aufgabe der Erfindung ist es, einen Roboter weiterzubilden, insbesondere wenigstens ein Strukturbauteil des Roboterarms des Roboters mit einer Kollisionserkennungsvorrichtung zu versehen, die besonders einfach und dennoch sehr zuverlässig arbeitend aufgebaut ist.

Die Aufgabe wird gelöst durch einen Roboter entsprechend Anspruch 1.

Die Erfindung bietet je nach Ausführungsform eine Verkleidung von Robotern, die in einfacher Weise auch Kontaktsensoren in den Roboter integriert. Ein Vorteil kann die schnelle und unkomplizierte Montage und Demontage der Abdeckungen auf der Roboterstruktur sein, ohne die Notwendigkeit von zusätzlichen Federelementen für die Sensorik. Je nach Ausführung stellt sich auch ein einfacher Aufbau des Gesamtsystems ein. Ein weiterer Vorteil kann darin liegen, dass mit kostengünstigen Kontaktsensoren, insbesondere Schaltleisten, verschiedene Betätigungs-/Auslösekräfte realisiert werden können und somit auf einfache Weise die Sensitivität des Roboters in den entsprechenden Achsen, Orientierungen und/oder Bereichen modular eingestellt werden kann. Durch Mehrfachanordnung und eine sinnvolle geometrische Gestaltung der Abdeckungen kann vorzugsweise mit einem eindimensionalen Kontaktsensor auch eine mehrachsige Kollisionserkennung durchgeführt werden. Ein weiterer Vorteil kann darin bestehen, dass mit der vorgestellten Lösung sogar auf eine separate bzw. gesonderte Führung zwischen Roboterstruktur und Abdeckung verzichtet werden kann. Auch wenn die erfindungsgemäßen Abdeckungen, eindimensionalen Kontaktsensoren und Schaltleisten in Verbindung mit Strukturbauteilen eines Roboterarms beschrieben sind, so bedeutet dies nicht, dass die Strukturbauteile Teil eines menschenähnlichen Armes sein müssen. Vielmehr können die erfindungsgemä-ßen Abdeckungen, eindimensionalen Kontaktsensoren und Schaltleisten an Strukturbauteilen beliebiger Roboter vorgesehen sein, soweit dies konstruktiv Sinn macht.

Wird auf eine separate Führung zwischen Roboterstruktur und Abdeckung verzichtet, so übernimmt der wenigstens eine Kontaktsensor, insbesondere die wenigstens eine Schaltleiste selbst die Funktionalität eines Führungselementes. Besonders vorteilhaft bei einer solchen Anordnung ist, dass die Schaltleiste selbst auch die notwendigen Federeigenschaften für die Vorspannung bereitstellt. Durch diese Anordnung ist der Gesamtaufbau einfach gestaltet und die wenigstens eine Abdeckung der Roboterstruktur lässt sich einfach und schnell montieren und auch wieder demontieren, beispielsweise zu Service- und Reparaturzwecken. Werden die Schaltleisten somit auch als Führungselemente verwendet, so gibt es zwei grundlegende Möglichkeiten der Anordnung dieser Sensorelemente. In den entsprechenden Ausführungen, insbesondere wie in den Figuren der Erfindung dargestellt, können Kollisionen in mindestens zwei Achsen detektiert werden.

Indem der wenigstens eine Kontaktsensor als eine zwischen dem Strukturbauteil und der Abdeckung angeordnete Schaltleiste ausgebildet ist, und eine in die Grundstellung der Abdeckung federvorgespannte, bewegliche Lagerung der Abdeckung an dem Strukturbauteil, durch eine inhärente Elastizität der Schaltleiste eingestellt ist, können separate Federelemente entfallen. Darüber hinaus können durch die Anzahl, die Lage und die Gestalt der Schaltleisten, der Abdeckung und/oder des Strukturbauteils die Federkraft der an dem Strukturbauteil gelagerten Abdeckung eingestellt werden.

Der Sensor kann ein Kollisionssensor sein. Alternativ oder ergänzend kann der Sensor aber auch eine andere Funktion aufweisen. Beispielsweise kann mit dem erfindungsgemäß vorgestellten Funktionsprinzip eine Mensch-Roboter Interaktion stattfinden und der Benutzer beispielsweise den Roboter handführen und die Schaltleisten dann - alternativ oder ergänzend zur Kollisionsfunktion - verwendet werden, um ein Signal als ein Eingabebefehl durch berührenden Kontakt der Abdeckung beispielsweise mit einer Hand oder eines Fingers eines Benutzers zu detektieren.

Die Abdeckung kann einen mittleren Wandabschnitt aufweisen, der ausgebildet ist, eine erste Oberfläche des Strukturbauteils zu überdecken und wenigstens zwei, den mittleren Wandabschnitt von gegenüberliegenden Seiten begrenzende Seitenwandabschnitte aufweisen, wobei wenigstens ein erster Seitenwandabschnitt der Abdeckung eine zweite Oberfläche des Strukturbauteils teilweise oder vollständig überlappt und wenigstens ein zweiter Seitenwandabschnitt der Abdeckung eine dritte Oberfläche des Strukturbauteils, die der zweiten Oberfläche des Strukturbauteils gegenüberliegt, teilweise oder vollständig überlappt, und die zweite Oberfläche des Strukturbauteils wenigstens einen ersten Vorsprung aufweist, der mit einer ersten Hinterschneidung an der Innenseite des ersten Seitenwandabschnitts der Abdeckung zusammenwirkt, um die Abdeckung federvorgespannt in ihrer Grundstellung an dem Strukturbauteil gegen Lösen vom Strukturbauteil gesichert zu halten und/oder die dritte Oberfläche des Strukturbauteils wenigstens einen zweiten Vorsprung aufweist, der mit einer zweiten Hinterschneidung an der Innenseite des zweiten Seitenwandabschnitts der Abdeckung zusammenwirkt, um die Abdeckung federvorgespannt in ihrer Grundstellung an dem Strukturbauteil gegen Lösen vom Strukturbauteil gesichert zu halten.

In der am Strukturbauteil gelagerten Anordnung der Abdeckung drückt die Abdeckung elastische Abschnitte der Schaltleiste um ein Maß zusammen, das kleiner ist, als ein Maß, das die Schaltleiste elektrisch auslösen würde. Wenn die Abdeckung an dem Strukturbauteil federnd gelagert ist und demgemäß die wenigstens eine Schaltleiste elastisch vorverformt, insbesondere elastisch zusammengedrückt ist, ist die Schaltleiste jedoch noch nicht elektrisch ausgelöst. Vielmehr verbleibt noch ein Restweg d.h. eine Restverformbarkeit an der Schaltleiste erhalten, wenn die Abdeckung an dem Strukturbauteil federnd gelagert ist, so dass bei einer Kollision die Abdeckung zusätzlich (gegen die Vorspannung) bewegt werden kann, um dann die Schaltleiste auszulösen.

Der erste Vorsprung des Strukturbauteils kann von einem an dem Strukturbauteil einstückig ausgeformten ersten Führungselement oder einem separat ausgebildeten und an dem Strukturbauteil befestigten ersten Führungselement gebildet wird, wobei die das erste Führungselement umgreifende erste Hinterschneidung der Abdeckung von einem ersten Umbugabschnitt oder ersten Nut des ersten Seitenwandabschnitts gebildet wird, und/oder der zweite Vorsprung des Strukturbauteils kann von einem an dem Strukturbauteil einstückig ausgeformtes zweiten Führungselement oder einem separat ausgebildeten und an dem Strukturbauteil befestigten zweiten Führungselement gebildet werden, wobei die das zweite Führungselement umgreifende zweite Hinterschneidung der Abdeckung von einem zweiten Umbugabschnitt oder zweiten Nut des zweiten Seitenwandabschnitts gebildet wird.

Eine besonders zuverlässige Ausführung ergibt sich, wenn die Führungselemente an dem Strukturbauteil direkt angeformt sind. Dabei entfällt die Gefahr eines unerwünschten Ablösens der Führungselemente von dem Strukturbauteil. Separat ausgebildete und an dem Strukturbauteil befestigte Führungselemente haben den Vorteil, dass bestehende Roboterarm d.h. bestehende Strukturbauteile (die keine angeformten Führungselemente aufweisen) mit derartigen Führungselementen nachgerüstet werden können.

Der erste Vorsprung des Strukturbauteils kann von einer an dem Strukturbauteil befestigten ersten Schaltleiste gebildet werden, wobei die die erste Schaltleiste umgreifende erste Hinterschneidung der Abdeckung von einem ersten Umbugabschnitt des ersten Seitenwandabschnitts gebildet wird, und/oder der zweite Vorsprung des Strukturbauteils kann von einer an dem Strukturbauteil befestigten zweiten Schaltleiste gebildet werden, wobei die die zweite Schaltleiste umgreifende zweite Hinterschneidung der Abdeckung von einem zweiten Umbugabschnitt des zweiten Seitenwandabschnitts gebildet wird.

Bei dieser Ausführung ist vorzugsweise keinerlei Bearbeitung der Roboterstruktur d.h. des jeweiligen Strukturbauteils notwendig. Die Schaltleisten werden direkt an dem Strukturbauteil befestigt. Dies kann beispielsweise über eine Klebeverbindung erfolgen. Die Gestalt der Abdeckung wird vorzugsweise so gewählt, dass sie sich wie eine Art Hülle um das Strukturbauteil des Roboterarms legen lässt, zumindest in den Bereichen, wo die Schaltleisten fixiert sind. Bei der Montage der Abdeckung können die Schaltleisten beispielsweise in x-Richtung und y-Richtung um ein Maß, wie weiter oben beschrieben, komprimiert sein, wodurch die nötige Vorspannkraft erzeugt wird. Je nach gewünschter Betätigungskraft für die Schaltleiste für eine Kollisionserkennung in x-Richtung kann der Wert für das Offset zwischen der Abdeckung und dem Strukturbauteil gewählt werden. Bei einem geringeren Offset erhöht sich die Vorspannkraft zwischen der Abdeckung und dem Strukturbauteil und damit nimmt die Kraft ab, die zum Auslösen des Sensors notwendig ist. Weist die Schaltleiste beispielsweise durch ihre Querschnittsform und/oder ihr Komprimierungsverhalten ein degressives Federverhalten auf (ähnlich wie bei einer Tellerfeder), so kann über die Vorspannung sowohl Betätigungskraft als auch Betätigungsweg variiert werden. Somit kann durch eine höhere Vorspannung die Betätigungskraft verringert werden. Die Schaltleiste kann also ein ähnliches Federverhalten wie eine Tellerfeder aufweisen.

Um die von der Vorspannung abhängige Sensitivität in y-Richtung zu variieren, kann die Position der Schaltleisten verändert werden. Wird die Federvorspannung vergrößert, so verringert sich der Weg, welcher überwunden werden muss, um das Sensorelement zu betätigen. Wird an der Abdeckung ein Hinterschnitt vorgesehen, so wird sichergestellt, dass die Schaltleisten ausgelöst werden, falls aufgrund einer Kollision die Abdeckung abgeschlagen werden sollte. Somit bleibt der Roboter beispielsweise stehen, wenn dies passiert.

Die erste Schaltleiste und/oder die zweite Schaltleiste können an eine Steuervorrichtung des Roboters angeschlossen sein, die ausgebildet ist, ein Signal zu erzeugen, das einen Fehlerzustand kennzeichnet, wenn die Abdeckung sich von dem Strukturbauteil löst und dabei der erste Umbugabschnitt des ersten Seitenwandabschnitts der Abdeckung die erste Schaltleiste betätigt und/oder der zweite Umbugabschnitt des zweiten Seitenwandabschnitts der Abdeckung die zweite Schaltleiste betätigt. In einer solchen Ausführung dienen die Schaltleisten also nicht nur dazu, ein Berühren, ein manuelles Bewegen, ein manuelles Betätigen und/oder eine Kollision durch ein Drücken gegen die Abdeckung zu erkennen, sondern dienen auch als eine Sicherheitseinrichtung, die ein unbeabsichtigtes Lösen der Abdeckung von dem Strukturbauteil mit denselben Sensoren d.h. genau diesen Schaltleisten erkennen kann.

Die Abdeckung weist einen mittleren Wandabschnitt auf, der ausgebildet ist, eine erste Oberfläche des Strukturbauteils zu überdecken und wenigstens zwei, den mittleren Wandabschnitt von gegenüberliegenden Seiten begrenzende Seitenwandabschnitte, wobei wenigstens ein erster Seitenwandabschnitt der Abdeckung eine zweite Oberfläche des Strukturbauteils teilweise oder vollständig überlappt und wenigstens ein zweiter Seitenwandabschnitt der Abdeckung eine dritte Oberfläche des Strukturbauteils, die der zweiten Oberfläche des Strukturbauteils gegenüberliegt, teilweise oder vollständig überlappt, und die zweite Oberfläche des Strukturbauteils wenigstens eine erste Hinterschneidung aufweist, die mit einem an der Innenseite des ersten Seitenwandabschnitts der Abdeckung ausgebildeten ersten Vorsprung, der von einer ersten Schaltleiste gebildet wird, zusammenwirkt, um die Abdeckung federvorgespannt in ihrer Grundstellung an dem Strukturbauteil gegen Lösen vom Strukturbauteil gesichert zu halten und/oder die dritte Oberfläche des Strukturbauteils wenigstens eine zweite Hinterschneidung aufweist, die mit einem an der Innenseite des zweiten Seitenwandabschnitts der Abdeckung ausgebildeten zweiten Vorsprung, der von einer zweiten Schaltleiste gebildet wird, zusammenwirkt, um die Abdeckung federvorgespannt in ihrer Grundstellung an dem Strukturbauteil gegen Lösen vom Strukturbauteil gesichert zu halten.

Bei dieser Konfiguration werden die Schaltleisten direkt an der Abdeckung befestigt. Dies kann beispielsweise durch eine Klebe- oder Klemmverbindung erfolgen. Sind die Schaltleisten an der Abdeckung montiert, so ist die Abdeckung zusammen mit den Schaltleisten lediglich noch über das Strukturbauteil zu führen. Auch hier kann über das Offset zwischen dem Strukturbauteil und der Abdeckung definiert werden, wie sehr die Schaltleisten bei der Montage komprimiert und somit vorgespannt werden. Wichtig hierbei ist, dass der Weg zur Vorspannung geringer bleibt als der Weg der überwunden werden muss, wenn die Schaltleisten aus dem Ruhezustand aus betätigt werden. Durch die Vorspannkraft sitzt die Abdeckung auch ohne zusätzliches Führungselement sicher auf der Roboterstruktur d.h. dem Strukturbauteil. Damit auch detektiert wird, falls sich die Abdeckung durch eine Kollision von der Roboterstruktur lösen sollte, kann entweder ein Hinterschnitt an dem Strukturbauteil vorgesehen sein oder vorzugsweise ein kleines zusätzliches Element z.B. durch Kleben angebracht werden. So betätigt dieses Element die Schaltleiste, falls sich die Abdeckung von dem Strukturbauteil lösen sollte und der Roboter stoppt. Durch eine Montagefase an dem zusätzlichen Element oder an dem Hinterschnitt des Strukturbauteils, ist das Montieren der Abdeckung auf dem Strukturbauteil leicht möglich.

Die erste Schaltleiste und/oder die zweite Schaltleiste können an eine Steuervorrichtung des Roboters angeschlossen sein, die ausgebildet ist, ein Signal zu erzeugen, das einen Fehlerzustand kennzeichnet, wenn die Abdeckung sich von dem Strukturbauteil löst und dabei die erste Hinterschneidung der zweiten Oberfläche des Strukturbauteils die erste Schaltleiste der Abdeckung betätigt und/oder die zweite Hinterschneidung der dritten Oberfläche des Strukturbauteils die zweite Schaltleiste der Abdeckung betätigt.

In allen Ausfügungsvarianten kann die wenigstens eine Schaltleiste als ein elektro-mechanischer Schalter ausgebildet sein, der wenigstens einen elektrischen Leiter aufweist, der in einem elektrisch isolierenden Profil aus einem elastischen Werkstoff eingebettet ist. So kann das Profil in einer ersten Ausführung zwei parallel zueinander in einem Abstand voneinander angeordnete Leiter aufweisen, die sich in Längserstreckung durch das Profil hindurchziehen. In dieser ersten Ausführung wird ein elektrischer Schaltkreis geschlossen, wenn das Profil so weit zusammengedrückt wird, bis sich die beiden Leiter elektrisch kontaktierend berühren. In einer zweiten Ausführung kann ein einzelner elektrischer Leiter sich durch die Längserstreckung des Profils hindurchziehen, wobei dieser eine Leiter aus einer seriellen Kette einer Vielzahl von Mikroschaltern gebildet wird. In dieser zweiten Ausführung wird ein elektrischer Schaltkreis geöffnet, wenn das Profil so weit zusammengedrückt wird, dass einer der Mikroschalter sich öffnet. Um einen sicheren Betrieb zu gewährleisten und ein Versagen erkennen bzw. ausschließen zu können, besteht auch die Möglichkeit, dass an der Schaltleiste während des gesamten Betriebes ein geringer elektrischer Strom oder Spannung anliegt. Wird die Schaltleiste betätigt, ändert sich der überwachte Wert und es kann auf eine Kollision rückgeschlossen werden. Wird jedoch gar kein Strom oder Spannung gemessen, so ist auf ein Fehlverhalten der Schaltleisten rückzuschließen. So kann sichergestellt werden, dass die Schaltleisten jederzeit funktionsfähig sind und fehlerfrei arbeiten.

Die Abdeckung kann einen mittleren Wandabschnitt aufweisen, der ausgebildet ist, eine erste Oberfläche des Strukturbauteils zu überdecken und wenigstens zwei, den mittleren Wandabschnitt von gegenüberliegenden Seiten begrenzende Seitenwandabschnitte aufweisen, wobei wenigstens ein erster Seitenwandabschnitt der Abdeckung eine zweite Oberfläche des Strukturbauteils teilweise oder vollständig überlappt und wenigstens ein zweiter Seitenwandabschnitt der Abdeckung eine dritte Oberfläche des Strukturbauteils, die der zweiten Oberfläche des Strukturbauteils gegenüberliegt, teilweise oder vollständig überlappt, und eine dem Strukturbauteil zugewandte Innenseite der Abdeckung, insbesondere der mittlere Wandabschnitt, der erste Seitenwandabschnitt und/oder der zweite Seitenwandabschnitt, ein oder mehrere vorspringende Rippen aufweist, die ausgebildet sind, an der wenigstens einen Schaltleiste berührend anzuliegen, derart, dass die ein oder mehreren vorspringenden Rippen bei einer Bewegung der Abdeckung relativ zum Strukturbauteil die wenigstens eine Schaltleiste betätigen, und/oder eine der Abdeckung zugewandte Außenseite des Strukturbauteils, insbesondere die erste Oberfläche, die zweite Oberfläche und/oder die dritte Oberfläche, ein oder mehrere vorspringende Rippen aufweist, die ausgebildet sind, an der wenigstens einen Schaltleiste berührend anzuliegen, derart, dass die ein oder mehreren vorspringenden Rippen bei einer Bewegung der Abdeckung relativ zum Strukturbauteil die wenigstens eine Schaltleiste betätigen.

Die Kontaktfläche zwischen der Abdeckung, die beispielsweise mit Rippen versehen sein kann, und den Schaltleisten, ist ein weiterer Parameter, welcher die Sensitivität der Schaltleisten beeinflusst. Im Folgenden werden verschiedene Ausführungsvarianten beschrieben, die Rippen aufweisen. Diese Ausführungsvarianten sind beispielhaft und können in der Geometrie variiert sein. Kernaussage ist, dass die aufzubringende Betätigungskraft mit der Fläche der Abdeckung, welche auf der Schaltleiste anliegt, variiert. Je Größer die Kontaktfläche zwischen der Abdeckung und der Schaltleiste ist, desto größer ist die notwendige Betätigungskraft. Indem die Rippen hinsichtlich ihrer Auflageflächen bezüglich der Schaltleisten verändert wird, kann die Sensitivität des Auslösens der Schaltleisten variiert werden, ohne dass die Schaltleisten selbst konstruktiv verändert oder durch andere ersetzt werden müssten.

In einer ersten Ausführungsvariante kann eine Vielzahl von Rippen in einer linearen Kette nebeneinander, beispielsweise in Form von Rauten oder Kreuzen an der Abdeckung angeordnet sein, wobei die Kette sich entlang der Längserstreckungen der Schaltleisten erstreckt. In einer solchen Anordnung liegen nur kurze Abschnitte eines jeden Schenkels der rautenförmigen oder kreuzförmigen Strukturen der Rippen auf den Schaltleisten auf.

In einer zweiten Ausführungsvariante kann die Vielzahl von Rippen in einer linearen Kette nebeneinander, beispielsweise in Form von Rauten oder Kreuzen an der Abdeckung angeordnet sein, wobei die Kette sich entlang der Längserstreckungen der Schaltleisten erstreckt. In einer solchen Anordnung liegen sowohl die kurzen Abschnitte eines jeden Schenkels der rautenförmigen oder kreuzförmigen Strukturen der Rippen auf den Schaltleisten auf und zusätzlich sind jeweils zwei Schenkel der rautenförmigen oder kreuzförmigen Strukturen der Rippen mit zusätzlichen Stegen versehen, die ebenfalls auf den Schaltleisten aufliegen. Die zusätzlichen Stege sind allerdings nur zwischen jeweils zwei Schenkeln angeordnet, wobei die jeweils benachbarten Schenkelpaare ohne zusätzliche Stege ausgebildet sind, d.h. die jeweils benachbarten Schenkelpaare frei bleiben. Die zusätzlichen Stege erstrecken sich längs der Längserstreckungen der Schaltleisten.

In einer dritten Ausführungsvariante kann die Vielzahl von Rippen in einer linearen Kette nebeneinander, beispielsweise in Form von Rauten oder Kreuzen an der Abdeckung angeordnet sein, wobei die Kette sich entlang der Längserstreckungen der Schaltleisten erstreckt. In einer solchen Anordnung liegen sowohl die kurzen Abschnitte eines jeden Schenkels der rautenförmigen oder kreuzförmigen Strukturen der Rippen auf den Schaltleisten auf und zusätzlich sind jeweils zwei Schenkel der rautenförmigen oder kreuzförmigen Strukturen der Rippen mit zusätzlichen Stegen versehen, die ebenfalls auf den Schaltleisten aufliegen. Die zusätzlichen Stege sind in der dritten Ausführungsvariante nicht nur wie bei der zweiten Ausführungsvariante zwischen jeweils zwei Schenkeln angeordnet, wobei die jeweils benachbarten Schenkelpaare ohne zusätzliche Stege ausgebildet sind, d.h. die jeweils benachbarten Schenkelpaare frei bleiben, sondern alle Schenkel bzw. Schenkelpaare sind mit Stegen verbunden, so dass sich insoweit ein über alle quer verlaufenden Rippen durchlaufender Steg ergibt, der sich zumindest fast vollständig über die Länge der zugeordneten Schaltleiste erstreckt. Die zusätzlichen Stege erstrecken sich längs der Längserstreckungen der Schaltleisten.

Eine besonders vorteilhafte Ausführung des Gesamtsystems kann erreicht werden, indem Rippen an dem Strukturbauteil oder an der Abdeckung vorgesehen werden. Die Kontaktfläche zwischen der Abdeckung, die beispielsweise mit Rippen versehen sein kann, und den Schaltleisten ist ein weiterer Parameter, welcher die Sensitivität der Schaltleisten beeinflusst. Je grö-ßer die Kontaktfläche zwischen der Abdeckung und der Schaltleiste ist, desto größer ist die zum Betätigen notwendige Kraft. So kann gezielt mittels der Geometrie der Rippen die Betätigungskraft variiert werden. Die Schaltleiste muss dabei nicht verändert werden. Außerdem wird durch die Rippen sichergestellt, dass die Schaltleiste bei einer Kollision stets ausgelöst wird, unabhängig davon, an welcher Stelle auf der Abdeckung die Krafteinleitung stattfindet. Durch ein geschickt angeordnetes Muster der Rippen erhält die Abdeckung auch eine ausreichende Steifigkeit bei gleichzeitig leichter und kompakter Ausführung und die Kraft wird vom Krafteintrittspunkt bis zur Auflagefläche der Rippen auf die Schaltleiste geleitet.

Die Abdeckung und/oder das Strukturbauteil kann wenigstens ein Leuchtmittel, insbesondere eine LED aufweisen, das an eine Steuervorrichtung des Roboters angeschlossen ist, wobei die Steuervorrichtung eingerichtet ist, im Falle eines auslösenden Betätigens der wenigstens einen Schaltleiste, ein den Auslösezustand der Schaltleiste kennzeichnendes Signal durch Ansteuern des Leuchtmittels, insbesondere der LED am Roboterarm optisch anzuzeigen.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen, welche durch die Ansprüche definiert ist**.**

Es zeigen:
- Fig. 1: einen beispielhaften Roboterarm mit mehreren Gelenken und diese Gelenke verbindenden Gliedern,
- Fig. 2: eine schematische Darstellung in einer Schnittansicht einer ersten Ausführungsform eines Strukturbauteils und einer Abdeckung mit angeformten Vorsprüngen an dem Strukturbauteil in einer Grundstellung,
- Fig. 3: eine schematische Darstellung in einer Schnittansicht der ersten Ausführungsform des Strukturbauteils und der Abdeckung mit angeformten Vorsprüngen an dem Strukturbauteil gemäß Fig. 2 in einer gedrückten Kollisionsstellung,
- Fig. 4: eine schematische Darstellung in einer Schnittansicht einer zweiten Ausführungsform eines Strukturbauteils und einer Abdeckung mit separaten Vorsprüngen an dem Strukturbauteil in einer Grundstellung,
- Fig. 5: eine schematische Darstellung in einer Schnittansicht der zweiten Ausführungsform des Strukturbauteils und der Abdeckung mit separaten Vorsprüngen an dem Strukturbauteil gemäß Fig. 4 in einer gedrückten Kollisionsstellung,
- Fig. 6: eine schematische Darstellung in einer Schnittansicht einer dritten Ausführungsform eines Strukturbauteils und einer Abdeckung mit seitlichen Schaltleisten an dem Strukturbauteil in einer Grundstellung,
- Fig. 7: eine schematische Darstellung in einer Schnittansicht der dritten Ausführungsform des Strukturbauteils und der Abdeckung mit seitlichen Schaltleisten an dem Strukturbauteil gemäß Fig. 6 in einer gedrückten Kollisionsstellung,
- Fig. 8-10: schematische Darstellungen verschiedener Ausführungsformen von vorspringenden Rippen an einer Innenseite der Abdeckung, und
- Fig. 11: eine perspektivische Explosionsdarstellung eines beispielhaften Strukturbauteils, das mehrere Schaltleisten aufweist, mit einer Abdeckung kurz vor einem Aufsetzen und mit definierter Formgebung für eine einfache Montage.

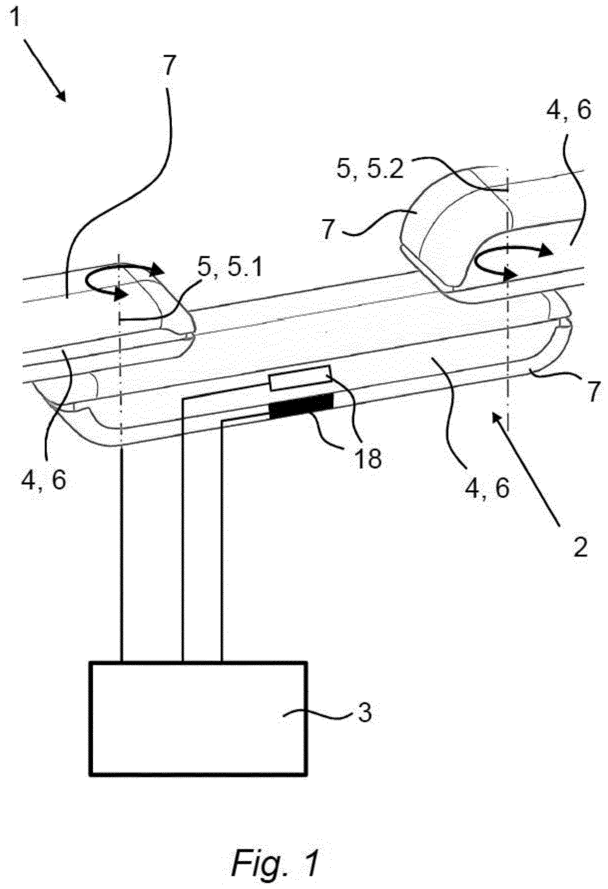

In der Fig. 1 ist ein repräsentatives Ausführungsbeispiel eines Roboters 1 gezeigt mit einem Roboterarm 2 und einer zughörigen Steuervorrichtung 3. Der Roboterarm 2 weist mehrere Glieder 4 und die Glieder 4 gegeneinander verstellende Gelenke 5 auf. Jedes Gelenk 5 ist von jeweils einem Gelenkmotor des Roboterarms 2 angetrieben. Die Steuervorrichtung 3 ist ausgebildet und eingerichtet, die Gelenkmotoren anzusteuern, um die Glieder 4 des Roboterarms 2 durch automatisches Verstellen der Gelenke 5 zu bewegen.

Demgemäß weist der Roboterarm 2 mehrere motorisch angetriebene Gelenke 5 und mehrere Glieder 4 auf, die jeweils zwei benachbarte Gelenke 5 dieser angetriebenen Gelenke 5 miteinander verbinden, wobei mindestens eines dieser Glieder 4 ein tragendes Strukturbauteil 6 aufweist, das ausgebildet ist zur Übertragung von Bewegungen, Kräften und/oder Momenten von einem benachbarten Gelenk 5.1 zu dem anderen benachbarten Gelenk 5.2.

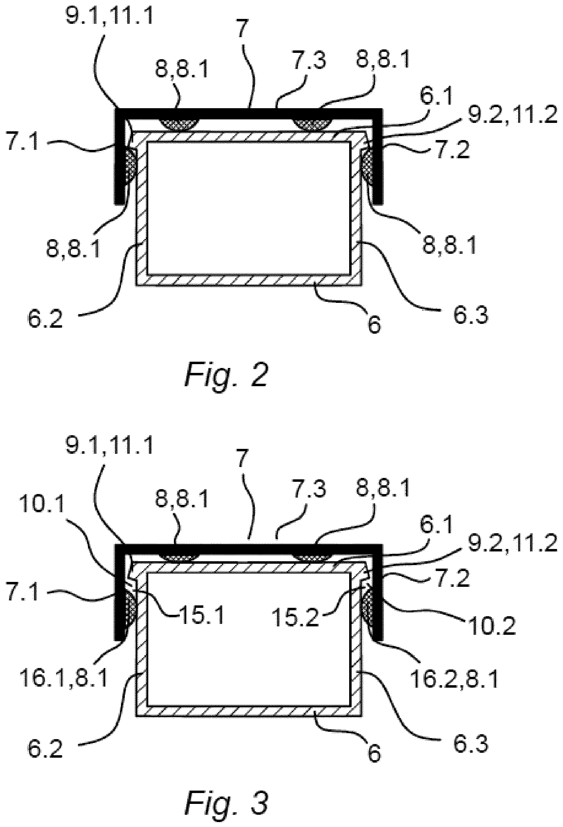

Wie insbesondere in Fig. 2 bis Fig. 7 in verschiedenen Ausführungsvarianten dargestellt ist, weist bei dem Roboterarm 2 wenigstens eines der Strukturbauteile 6 eine das zugeordnete Strukturbauteil 6 zumindest teilweise überdeckende Abdeckung 7 und wenigstens einen Kontaktsensor 8 auf. Der wenigstens eine Kontaktsensor 8 ist erfindungsgemäße als eine zwischen dem Strukturbauteil 6 und der Abdeckung 7 angeordnete Schaltleiste 8.1 ausgebildet. Eine in die jeweilige Grundstellung (Fig. 2, Fig. 4, Fig. 6) der Abdeckung 7 federvorgespannte, bewegliche Lagerung der Abdeckung 7 an dem Strukturbauteil 6 erfolgt durch eine inhärente Elastizität der wenigstens einen Schaltleiste 8.1.

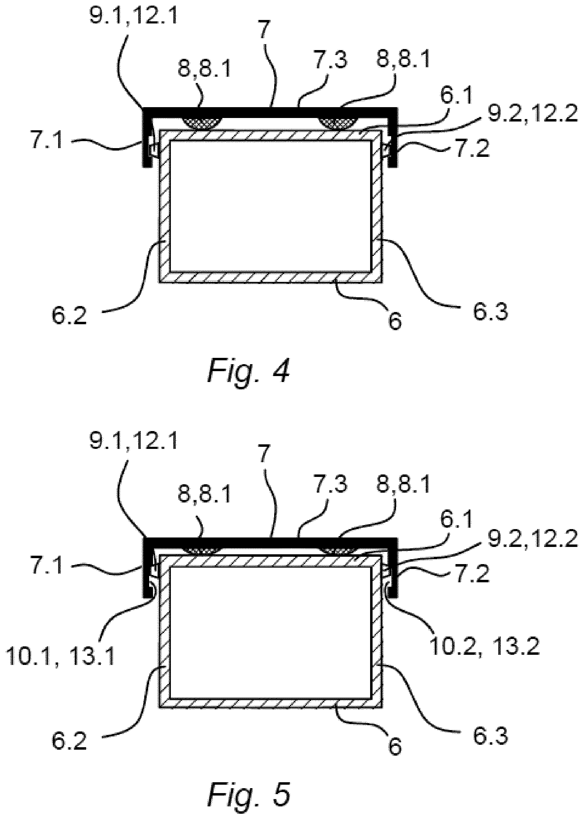

Die Abdeckung 7 weist einen mittleren Wandabschnitt 7.3 auf, der ausgebildet ist, eine erste Oberfläche 6.1 des Strukturbauteils 6 zu überdecken und wenigstens zwei, den mittleren Wandabschnitt 7.3 von gegenüberliegenden Seiten begrenzende Seitenwandabschnitte 7.1, 7.2 auf, wobei wenigstens ein erster Seitenwandabschnitt 7.1 der Abdeckung 7 eine zweite Oberfläche 6.2 des Strukturbauteils 6 teilweise oder vollständig überlappt und wenigstens ein zweiter Seitenwandabschnitt 7.2 der Abdeckung 7 eine dritte Oberfläche 6.3 des Strukturbauteils 6, die der zweiten Oberfläche 6.2 des Strukturbauteils 6 gegenüberliegt, teilweise oder vollständig überlappt. Gemäß den Ausführungen der Fig. 2 bis Fig. 5 weist die zweite Oberfläche 6.2 des Strukturbauteils 6 wenigstens einen ersten Vorsprung 9.1 auf, der mit einer ersten Hinterschneidung 10.1 an der Innenseite des ersten Seitenwandabschnitts 7.1 der Abdeckung 7 zusammenwirkt, um die Abdeckung 7 federvorgespannt in ihrer Grundstellung (Fig. 2, Fig. 4) an dem Strukturbauteil 6 gegen Lösen vom Strukturbauteil 6 gesichert zu halten.

Alternativ oder ergänzend weist die dritte Oberfläche 6.3 des Strukturbauteils 6 wenigstens einen zweiten Vorsprung 9.2 auf, der mit einer zweiten Hinterschneidung 10.2 an der Innenseite des zweiten Seitenwandabschnitts 7.2 der Abdeckung 7 zusammenwirkt, um die Abdeckung 7 federvorgespannt in ihrer Grundstellung (Fig. 2, Fig. 4) an dem Strukturbauteil 6 gegen Lösen vom Strukturbauteil 6 gesichert zu halten.

In der in Fig. 2 und Fig. 3 dargestellten Ausführungsform wird der erste Vorsprung 9.1 des Strukturbauteils 6 von einem an dem Strukturbauteil 6 einstückig ausgeformten ersten Führungselement 11.1 gebildet und der zweite Vorsprung 9.2 des Strukturbauteils 6 von einem an dem Strukturbauteil 6 einstückig ausgeformten zweiten Führungselement 11.2 gebildet. In der in Fig. 4 und Fig. 5 dargestellten abgewandelten Ausführungsform wird der erste Vorsprung 9.1 des Strukturbauteils 6 hingegen von einem separat ausgebildeten und an dem Strukturbauteil 6 befestigten ersten Führungselement 12.1 gebildet und der zweite Vorsprung 9.2 des Strukturbauteils 6 von einem separat ausgebildeten und an dem Strukturbauteil 6 befestigten zweiten Führungselement 12.2 gebildet.

Wie in Fig. 4 und Fig. 5 dargestellt ist, wird im Falle dieser Ausführungsform die das erste Führungselement 12.1 umgreifende erste Hinterschneidung 10.1 der Abdeckung 7 von einer ersten Nut 13.1 des ersten Seitenwandabschnitts 7.1 gebildet und die das zweite Führungselement 12.2 umgreifende zweite Hinterschneidung 10.2 der Abdeckung 7 von einer zweiten Nut 13.2 des ersten Seitenwandabschnitts 7.1 gebildet.

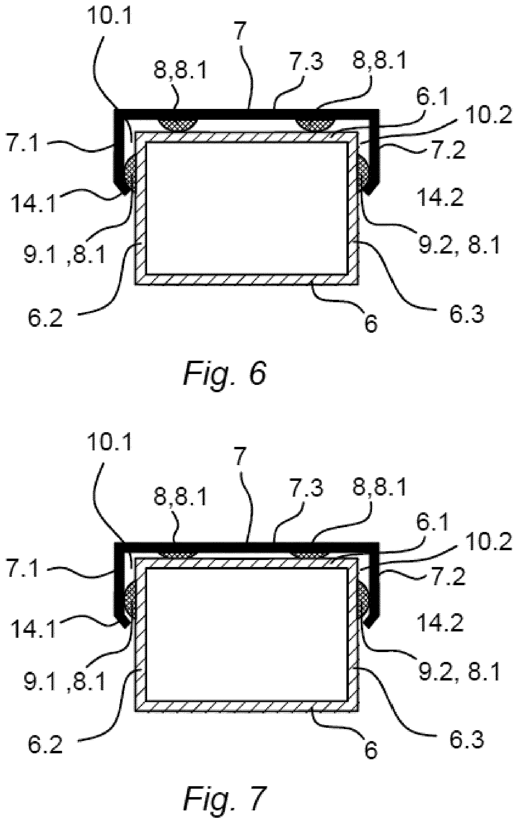

Im Falle der Fig. 4 und Fig. 5 kann die erste Nut 13.1 gegebenenfalls auch durch einen ersten Umbugabschnitt 14.1 analog der Fig. 6 und Fig. 7 und die zweite Nut 13.2 durch einen zweiten Umbugabschnitt 14.2 analog der Fig. 6 und Fig. 7 ersetzt sein.

In der Ausführungsform gemäß Fig. 6 und Fig. 7 wird der erste Vorsprung 9.1 des Strukturbauteils 6 von einer an dem Strukturbauteil 6 befestigten ersten Schaltleiste 8.1 gebildet, wobei die die erste Schaltleiste 8.1 umgreifende erste Hinterschneidung 10.1 der Abdeckung 7 von einem ersten Umbugabschnitt 14.1 des ersten Seitenwandabschnitts 7.1 gebildet wird, und der zweite Vorsprung 9.2 des Strukturbauteils 6 von einer an dem Strukturbauteil 6 befestigten zweiten Schaltleiste 8.2 gebildet wird, wobei die die zweite Schaltleiste 8.2 umgreifende zweite Hinterschneidung 10.2 der Abdeckung 7 von einem zweiten Umbugabschnitt 14.2 des zweiten Seitenwandabschnitts 7.2 gebildet wird.

Die erste Schaltleiste 8.1 und/oder die zweite Schaltleiste 8.2 ist an die Steuervorrichtung 3 (Fig. 1) des Roboters 1 angeschlossen, die ausgebildet ist, ein Signal zu erzeugen, das einen Fehlerzustand kennzeichnet, wenn die Abdeckung 7 sich von dem Strukturbauteil 6 löst und dabei der erste Umbugabschnitt 14.1 des ersten Seitenwandabschnitts 7.1 der Abdeckung 7 die erste Schaltleiste 8.1 betätigt oder der zweite Umbugabschnitt 14.2 des zweiten Seitenwandabschnitts 7.2 der Abdeckung 7 die zweite Schaltleiste 8.2 betätigt. Es wird über diese Schaltleisten nicht nur detektiert, wenn sich z.B. die Abdeckung lösen würde, sondern allgemein, wenn eine Berührung oder eine Kollision auftritt.

Zurückkommend auf die Fig. 2 und Fig. 3 weist in der dort dargestellten Ausführungsform die Abdeckung 7 einen mittleren Wandabschnitt 7.3 auf, der ausgebildet ist, eine erste Oberfläche 6.1 des Strukturbauteils 6 zu überdecken und weist wenigstens zwei, den mittleren Wandabschnitt 7.3 von gegenüberliegenden Seiten begrenzende Seitenwandabschnitte 6.2 und 6.3 auf, wobei wenigstens ein erster Seitenwandabschnitt 7.1 der Abdeckung 7 eine zweite Oberfläche 6.2 des Strukturbauteils 6 im Falle des vorliegenden Ausführungsbeispiels teilweise überlappt und wenigstens ein zweiter Seitenwandabschnitt 7.2 der Abdeckung 7 eine dritte Oberfläche 6.3 des Strukturbauteils 6, die der zweiten Oberfläche 6.2 des Strukturbauteils 6 gegenüberliegt, im Falle des vorliegenden Ausführungsbeispiels auch teilweise überlappt.

Die zweite Oberfläche 6.2 des Strukturbauteils 6 weist dabei aufgrund des einstückig ausgeformten ersten Führungselements 11.1 eine erste Hinterschneidung 15.1 auf, die mit einem an der Innenseite des ersten Seitenwandabschnitts 7.1 der Abdeckung 7 ausgebildeten ersten Vorsprung 16.1, der von einer ersten Schaltleiste 8.1 gebildet wird, zusammenwirkt, um die Abdeckung 7 federvorgespannt in ihrer Grundstellung an dem Strukturbauteil 6 gegen Lösen vom Strukturbauteil 6 gesichert zu halten. Auch die dritte Oberfläche 6.3 des Strukturbauteils 6 weist in dieser Ausführungsform eine zweite Hinterschneidung 15.2 auf, die mit einem an der Innenseite des zweiten Seitenwandabschnitts 7.2 der Abdeckung 7 ausgebildeten zweiten Vorsprung 16.2, der von einer zweiten Schaltleiste 8.1 gebildet wird, zusammenwirkt, um die Abdeckung 7 federvorgespannt in ihrer Grundstellung an dem Strukturbauteil 6 gegen Lösen vom Strukturbauteil 6 gesichert zu halten. Die Abdeckung 7 mit ihren an dem ersten Seitenwandabschnitt 7.1 und dem zweiten Seitenwandabschnitt 7.2 angebrachten seitlichen Schaltleisten 8.1 als zweite Vorsprünge 16.2 begrenzen insoweit die erste Hinterschneidung 10.1 bzw. die zweite Hinterschneidung 10.2.

Die erste Schaltleiste 8.1 und/oder die zweite Schaltleiste 8.1 sind an die Steuervorrichtung 3 (Fig. 1) des Roboters 1 angeschlossen, die ausgebildet ist, ein Signal zu erzeugen, das einen Fehlerzustand kennzeichnet, wenn die Abdeckung 7 sich von dem Strukturbauteil 6 löst und dabei die erste Hinterschneidung 15.1 der zweiten Oberfläche 6.2 des Strukturbauteils 6 bzw. aufgrund des einstückig ausgeformten ersten Führungselements 11.1, die erste Schaltleiste 8.1 der Abdeckung 7 betätigt und/oder die zweite Hinterschneidung 15.2 der dritten Oberfläche 6.3 des Strukturbauteils 6 bzw. aufgrund des einstückig ausgeformten zweiten Führungselements 11.2, die zweite Schaltleiste 8.1 der Abdeckung 7 betätigt.

In Allen Ausführungsformen kann die Abdeckung 7 eine dem Strukturbauteil 6 zugewandte Innenseite aufweisen, d.h. insbesondere der mittlere Wandabschnitt 7.3, der erste Seitenwandabschnitt 7.1 und/oder der zweite Seitenwandabschnitt 7.2, jeweils an der Innenseite, ein oder mehrere vorspringende Rippen 17 aufweisen, die ausgebildet sind, an der wenigstens einen Schaltleiste 8.1 berührend anzuliegen, derart, dass die ein oder mehreren vorspringenden Rippen 17 bei einer Bewegung der Abdeckung 7 relativ zum Strukturbauteil 6 die wenigstens eine Schaltleiste 8.1 betätigen.

Alternativ oder ergänzend kann eine der Abdeckung 7 zugewandte Außenseite des Strukturbauteils 6, insbesondere die erste Oberfläche 6.1, die zweite Oberfläche 6.2 und/oder die dritte Oberfläche 6.3, ebenso ein oder mehrere vorspringende Rippen 17 aufweisen, die ausgebildet sind, an der wenigstens einen Schaltleiste 8.1 berührend anzuliegen, derart, dass die ein oder mehreren vorspringenden Rippen 17 bei einer Bewegung der Abdeckung 7 relativ zum Strukturbauteil 6 die wenigstens eine Schaltleiste 8.1 betätigen.

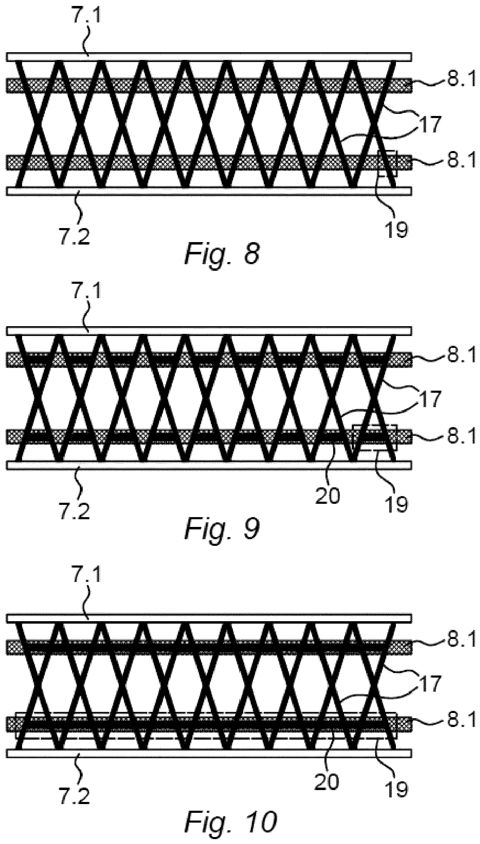

In der ersten Ausführungsvariante gemäß Fig. 8 sind eine Vielzahl von Rippen 17 in einer linearen Kette nebeneinander, beispielsweise in Form von Rauten oder Kreuzen, oder einer beliebigen anderen Geometrie, an der Abdeckung 7 angeordnet, wobei die Kette sich entlang der Längserstreckungen der Schaltleisten 8.1 erstreckt. In einer solchen Anordnung gemäß Fig. 8 liegen demgemäß - wie durch den gestrichelt dargestellten Rahmen 19 aufgezeigt - nur kurze Abschnitte eines jeden Schenkels der rautenförmigen oder kreuzförmigen Strukturen der Rippen 17 auf den Schaltleisten 8.1 auf.

In der zweiten Ausführungsvariante gemäß Fig. 9 sind die Vielzahl von Rippen 17 in einer linearen Kette nebeneinander, beispielsweise in Form von Rauten oder Kreuzen an der Abdeckung 7 angeordnet, wobei die Kette sich entlang der Längserstreckungen der Schaltleisten 8.1 erstreckt. In einer solchen Anordnung gemäß Fig. 9 liegen demgemäß - wie durch den gestrichelt dargestellten Rahmen 19 aufgezeigt - sowohl die kurzen Abschnitte eines jeden Schenkels der rautenförmigen oder kreuzförmigen Strukturen der Rippen 17, wie in der Version gemäß Fig. 8 auf den Schaltleisten 8.1 auf und zusätzlich sind jeweils zwei Schenkel der rautenförmigen oder kreuzförmigen Strukturen der Rippen 17 mit zusätzlichen Stegen 20 versehen, die ebenfalls auf den Schaltleisten 8.1 aufliegen. Die zusätzlichen Stege 20 sind allerdings nur zwischen jeweils zwei Schenkeln angeordnet, wobei die jeweils benachbarten Schenkelpaare ohne zusätzliche Stege 20 ausgebildet sind, d.h. die jeweils benachbarten Schenkelpaare frei bleiben.

In der dritten Ausführungsvariante gemäß Fig. 10 sind die Vielzahl von Rippen 17 in einer linearen Kette nebeneinander, beispielsweise in Form von Rauten oder Kreuzen an der Abdeckung 7 angeordnet, wobei die Kette sich entlang der Längserstreckungen der Schaltleisten 8.1 erstreckt. In einer solchen Anordnung gemäß Fig. 10 liegen demgemäß - wie durch den gestrichelt dargestellten Rahmen 19 aufgezeigt - sowohl die kurzen Abschnitte eines jeden Schenkels der rautenförmigen oder kreuzförmigen Strukturen der Rippen 17, wie in der Version gemäß Fig. 8 auf den Schaltleisten 8.1 auf und zusätzlich sind jeweils zwei Schenkel der rautenförmigen oder kreuzförmigen Strukturen der Rippen 17 mit zusätzlichen Stegen 20 versehen, die ebenfalls auf den Schaltleisten 8.1 aufliegen. Die zusätzlichen Stege 20 sind in der dritten Ausführungsvariante gemäß Fig. 10 nicht nur wie bei Fig. 19 zwischen jeweils zwei Schenkeln angeordnet, wobei die jeweils benachbarten Schenkelpaare ohne zusätzliche Stege 20 ausgebildet sind, d.h. die jeweils benachbarten Schenkelpaare frei bleiben, sondern alle Schenkel bzw. Schenkelpaare sind mit Stegen 20 verbunden, so dass sich ein über alle quer verlaufenden Rippen 17 durchlaufender Steg 20 ergibt, der sich fast vollständig über die Länge der zugeordneten Schaltleiste 8.1 erstreckt, wie dies insbesondere durch den in Fig. 10 gestrichelt dargestellten Rahmen 19 aufgezeigt ist. Die Verrippungen bzw. die Auflageflächen können je nach Anforderung beliebig variiert werden.

Wie in Fig.1 schematisch dargestellt ist, kann die Abdeckung 7 und/oder das Strukturbauteil 6 wenigstens ein Leuchtmittel 18, insbesondere eine LED, aufweisen, das an die Steuervorrichtung 3 des Roboters 1 angeschlossen ist, wobei die Steuervorrichtung 3 eingerichtet ist, im Falle eines auslösenden Betätigens der wenigstens einen Schaltleiste 8.1, ein den Auslösezustand der Schaltleiste 8.1 kennzeichnendes Signal durch Ansteuern des Leuchtmittels 18, insbesondere der LED, am Roboterarm 2 optisch anzuzeigen.

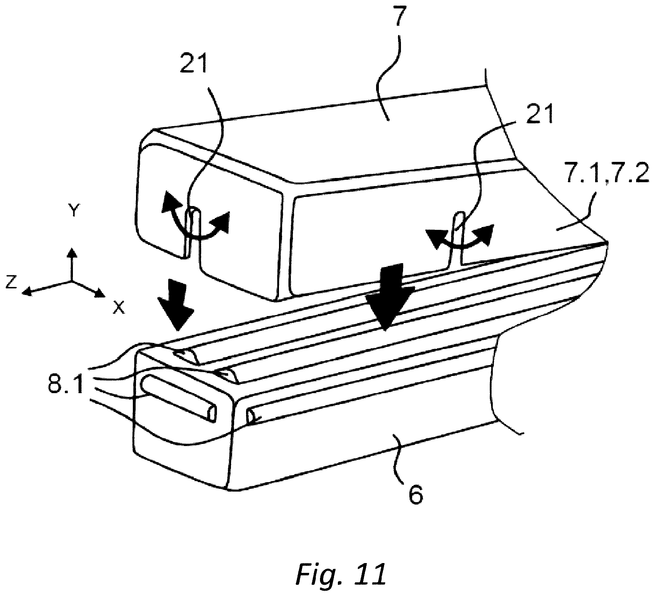

Die Fig. 11 zeigt in einer perspektivischen Ansicht ein beispielhaftes Strukturbauteil 6, das vereinfacht als ein Quader dargestellt ist und eine haubenartige Abdeckung 7 während einer Montagebewegung (Pfeile). Das Strukturbauteil 6 weist an seiner in Fig. 11 nach oben weisenden ersten Oberfläche 6.1 zwei in einem Abstand voneinander angeordnete, sich parallel zueinander erstreckende Schaltleisten 8.1 auf. Die in Fig. 11 nach vorne weisende, lange zweite Oberfläche 6.2 weist eine einzelne Schaltleiste 8.1 auf. Auch die in Fig. 11 nicht sichtbare, der zweite Oberfläche 6.1 gegenüberliegende, lange dritte Oberfläche 6.3 weist eine einzelne Schaltleiste 8.1 auf. Darüber hinaus weisen auch die in Fig. 11 nach vorne weisende, kurze Oberfläche eine kurze Schaltleiste 8.1 auf und die nicht sichtbare, der vorderen kurzen Oberfläche gegenüberliegende kurze Oberfläche weist ebenfalls eine kurze Schaltleiste 8.1 auf. Die Seitenwandabschnitte 7.1, 7.2 der Abdeckung 7 können, wie in Fig. 11 dargestellt ist, mit Schlitzen 21 versehen sein. Mittels der Schlitze 21 kann die Elastizität der Seitenwandabschnitte 7.1, 7.2 lokal gezielt erhöht werden, um die Abdeckung 7 in einfacher Weise auf das Strukturbauteil 6 aufrasten bzw. aufschnappen lassen zu können.

Neben einer zweidimensionalen Kollisionsüberwachung kann in einer Ausführung gemäß Fig. 11 durch eine sinnvolle Anordnung der Komponenten auch der dreidimensionale Achszustand überwacht werden, ohne einen dreidimensionalen Kraftsensor verwenden zu müssen. Dazu ist lediglich die Abdeckung auf dem Strukturbauteil und den Schaltleisten in den entsprechenden Richtungen vorzusehen. In Fig. 11 ist eine mögliche Anordnung visualisiert. Wie beschrieben werden die Schaltleisten in x-Richtung und y-Richtung angeordnet. Zusätzlich können weitere Schaltleisten mit Auslöserichtung in z-Richtung angebracht werden. Um eine Montage auf dem Strukturbauteil zu ermöglichen, kann die Abdeckung an sinnvollen Stellen geschlitzt werden, sodass mittels einer Art Feststoffgelenke die notwendige Nachgiebigkeit für eine Montage bereitgestellt wird.

## Patentansprüche

1. Roboter mit einem Roboterarm (2), aufweisend mehrere motorisch angetriebene Gelenke (5) und mehrere Glieder (4), die jeweils zwei benachbarte Gelenke (5.1, 5.2) dieser angetriebenen Gelenke (5) miteinander verbinden, wobei mindestens eines dieser Glieder (4) ein tragendes Strukturbauteil (6) aufweist, das ausgebildet ist zur Übertragung von Kräften und/oder Momenten von einem benachbarten Gelenk (5.1) zu dem anderen benachbarten Gelenk (5.2), wobei das Strukturbauteil (6) mit wenigstens einer das Strukturbauteil (6) zumindest teilweise überdeckenden Abdeckung (7) und wenigstens einem Kontaktsensor (8) versehen ist, wobei der wenigstens eine Kontaktsensor (8) als eine zwischen dem Strukturbauteil (6) und der Abdeckung (7) angeordnete Schaltleiste (8.1) ausgebildet ist, und eine in die Grundstellung der Abdeckung (7) federvorgespannte, bewegliche Lagerung der Abdeckung (7) an dem Strukturbauteil (6), durch eine inhärente Elastizität der Schaltleiste (8.1) eingestellt ist, **dadurch gekennzeichnet, dass** die Abdeckung (7) einen mittleren Wandabschnitt (7.3) aufweist, der ausgebildet ist, eine erste Oberfläche (6.1) des Strukturbauteils (6) zu überdecken und wenigstens zwei, den mittleren Wandabschnitt (7.3) von gegenüberliegenden Seiten begrenzende Seitenwandabschnitte (7.1, 7.2) aufweist, wobei wenigstens ein erster Seitenwandabschnitt (7.1) der Abdeckung (7) eine zweite Oberfläche (6.2) des Strukturbauteils teilweise oder vollständig überlappt und wenigstens ein zweiter Seitenwandabschnitt (7.2) der Abdeckung (7) eine dritte Oberfläche (6.3) des Strukturbauteils (6), die der zweiten Oberfläche (6.2) des Strukturbauteils (6) gegenüberliegt, teilweise oder vollständig überlappt, und die zweite Oberfläche (6.2) des Strukturbauteils (6) wenigstens einen ersten Vorsprung (9.1) aufweist, der mit einer ersten Hinterschneidung (10.1) an der Innenseite des ersten Seitenwandabschnitts (7.1) der Abdeckung (7) zusammenwirkt, um die Abdeckung (7) federvorgespannt in ihrer Grundstellung an dem Strukturbauteil (6) gegen Lösen vom Strukturbauteil (6) gesichert zu halten und/oder die dritte Oberfläche (6.3) des Strukturbauteils (6) wenigstens einen zweiten Vorsprung (9.2) aufweist, der mit einer zweiten Hinterschneidung (10.2) an der Innenseite des zweiten Seitenwandabschnitts (7.2) der Abdeckung (7) zusammenwirkt, um die Abdeckung (7) federvorgespannt in ihrer Grundstellung an dem Strukturbauteil (6) gegen Lösen vom Strukturbauteil (6) gesichert zu halten.

2. Roboter nach Anspruch 1, **dadurch gekennzeichnet, dass** der erste Vorsprung (9.1) des Strukturbauteils (6) von einem an dem Strukturbauteil (6) einstückig ausgeformten ersten Führungselement (11.1) oder einem separat ausgebildeten und an dem Strukturbauteil (6) befestigten ersten Führungselement (11.1) gebildet wird, wobei die das erste Führungselement (11.1) umgreifende erste Hinterschneidung (10.1) der Abdeckung (7) von einem ersten Umbugabschnitt (14.1) oder ersten Nut (13.1) des ersten Seitenwandabschnitts (7.1) gebildet wird, und/oder der zweite Vorsprung (9.2) des Strukturbauteils (6) von einem an dem Strukturbauteil (6) einstückig ausgeformtes zweiten Führungselement (11.2) oder einem separat ausgebildeten und an dem Strukturbauteil befestigten zweiten Führungselement (11.2) gebildet wird, wobei die das zweite Führungselement (11.2) umgreifende zweite Hinterschneidung (10.2) der Abdeckung (7) von einem zweiten Umbugabschnitt (14.2) oder zweiten Nut (13.2) des zweiten Seitenwandabschnitts (7.2) gebildet wird.

3. Roboter nach Anspruch 1, **dadurch gekennzeichnet, dass** der erste Vorsprung (9.1) des Strukturbauteils (6) von einer an dem Strukturbauteil (6) befestigten ersten Schaltleiste (8.1) gebildet wird, wobei die die erste Schaltleiste (8.1) umgreifende erste Hinterschneidung (10.1) der Abdeckung (7) von einem ersten Umbugabschnitt (14.1) des ersten Seitenwandabschnitts (7.1) gebildet wird, und/oder der zweite Vorsprung (9.2) des Strukturbauteils (6) von einer an dem Strukturbauteil (6) befestigten zweiten Schaltleiste (8.1) gebildet wird, wobei die die zweite Schaltleiste (8.1) umgreifende zweite Hinterschneidung (10.2) der Abdeckung (7) von einem zweiten Umbugabschnitt (14.2) des zweiten Seitenwandabschnitts (7.2) gebildet wird.

4. Roboter nach Anspruch 3, **dadurch gekennzeichnet, dass** die erste Schaltleiste (8.1) und/oder die zweite Schaltleiste (8.1) an eine Steuervorrichtung (3) des Roboters (1) angeschlossen sind, die ausgebildet ist, ein Signal zu erzeugen, das einen Fehlerzustand kennzeichnet, wenn die Abdeckung (7) sich von dem Strukturbauteil (6) löst und dabei der erste Umbugabschnitt (14.1) des ersten Seitenwandabschnitts (7.1) der Abdeckung (7) die erste Schaltleiste (8.1) betätigt und/oder der zweite Umbugabschnitt (14.2) des zweiten Seitenwandabschnitts (7.2) der Abdeckung (7) die zweite Schaltleiste (8.1) betätigt.

5. Roboter nach Anspruch 1, **dadurch gekennzeichnet, dass** die Abdeckung (7) einen mittleren Wandabschnitt (7.3) aufweist, der ausgebildet ist, eine erste Oberfläche (6.1) des Strukturbauteils (6) zu überdecken und wenigstens zwei, den mittleren Wandabschnitt (7.3) von gegenüberliegenden Seiten begrenzende Seitenwandabschnitte (7.1, 7.2) aufweist, wobei wenigstens ein erster Seitenwandabschnitt (7.1) der Abdeckung (7) eine zweite Oberfläche (6.2) des Strukturbauteils (6) teilweise oder vollständig überlappt und wenigstens ein zweiter Seitenwandabschnitt (7.2) der Abdeckung (7) eine dritte Oberfläche (6.3) des Strukturbauteils (6), die der zweiten Oberfläche (6.2) des Strukturbauteils (6) gegenüberliegt, teilweise oder vollständig überlappt, und die zweite Oberfläche (6.2) des Strukturbauteils (6) wenigstens eine erste Hinterschneidung (15.1) aufweist, die mit einem an der Innenseite des ersten Seitenwandabschnitts (7.1) der Abdeckung (7) ausgebildeten ersten Vorsprung (16.1), der von einer ersten Schaltleiste (8.1) gebildet wird, zusammenwirkt, um die Abdeckung (7) federvorgespannt in ihrer Grundstellung an dem Strukturbauteil (6) gegen Lösen vom Strukturbauteil (6) gesichert zu halten und/oder die dritte Oberfläche (6.3) des Strukturbauteils (6) wenigstens eine zweite Hinterschneidung (15.2) aufweist, die mit einem an der Innenseite des zweiten Seitenwandabschnitts (7.2) der Abdeckung (7) ausgebildeten zweiten Vorsprung (16.2), der von einer zweiten Schaltleiste (8.1) gebildet wird, zusammenwirkt, um die Abdeckung (7) federvorgespannt in ihrer Grundstellung an dem Strukturbauteil (6) gegen Lösen vom Strukturbauteil (6) gesichert zu halten.

6. Roboter nach Anspruch 5, **dadurch gekennzeichnet, dass** die erste Schaltleiste (8.1) und/oder die zweite Schaltleiste (8.1) an eine Steuervorrichtung (3) des Roboters (1) angeschlossen sind, die ausgebildet ist, ein Signal zu erzeugen, das einen Fehlerzustand kennzeichnet, wenn die Abdeckung (7) sich von dem Strukturbauteil (6) löst und dabei die erste Hinterschneidung (15.1) der zweiten Oberfläche (6.2) des Strukturbauteils (6) die erste Schaltleiste (8.1) der Abdeckung (7) betätigt und/oder die zweite Hinterschneidung (15.2) der dritten Oberfläche (6.3) des Strukturbauteils (6) die zweite Schaltleiste (8.1) der Abdeckung (7) betätigt.

7. Roboter nach einem der Ansprüche 1 bis 6, **dadurch gekennzeichnet, dass** die wenigstens eine Schaltleiste (8.1) als ein elektro-mechanischer Schalter ausgebildet ist, der wenigstens einen elektrischen Leiter aufweist, der in einem elektrisch isolierendem Profil aus einem elastischen Werkstoff eingebettet ist.

8. Roboter nach einem der Ansprüche 1 bis 7, **dadurch gekennzeichnet, dass** die Abdeckung (7) einen mittleren Wandabschnitt (7.3) aufweist, der ausgebildet ist, eine erste Oberfläche (6.1) des Strukturbauteils (6) zu überdecken und wenigstens zwei, den mittleren Wandabschnitt (7.3) von gegenüberliegenden Seiten begrenzende Seitenwandabschnitte (7.1, 7.2) aufweist, wobei wenigstens ein erster Seitenwandabschnitt (7.1) der Abdeckung (7) eine zweite Oberfläche (6.2) des Strukturbauteils (6) teilweise oder vollständig überlappt und wenigstens ein zweiter Seitenwandabschnitt (7.2) der Abdeckung (7) eine dritte Oberfläche (6.3) des Strukturbauteils (6), die der zweiten Oberfläche (6.2) des Strukturbauteils (6) gegenüberliegt, teilweise oder vollständig überlappt, und eine dem Strukturbauteil (6) zugewandte Innenseite der Abdeckung (7), insbesondere der mittlere Wandabschnitt (7.3), der erste Seitenwandabschnitt (7.1) und/oder der zweite Seitenwandabschnitt (7.2), ein oder mehrere vorspringende Rippen (17) aufweist, die ausgebildet sind, an der wenigstens einen Schaltleiste (8.1) berührend anzuliegen, derart, dass die ein oder mehreren vorspringenden Rippen (17) bei einer Bewegung der Abdeckung (7) relativ zum Strukturbauteil (6) die wenigstens eine Schaltleiste (8.1) betätigen, und/oder eine der Abdeckung (7) zugewandte Außenseite des Strukturbauteils (6), insbesondere die erste Oberfläche (6.1), die zweite Oberfläche (6.2) und/oder die dritte Oberfläche (6.3), ein oder mehrere vorspringende Rippen (17) aufweist, die ausgebildet sind, an der wenigstens einen Schaltleiste (8.1) berührend anzuliegen, derart, dass die ein oder mehreren vorspringenden Rippen (17) bei einer Bewegung der Abdeckung (7) relativ zum Strukturbauteil (6) die wenigstens eine Schaltleiste (8.1) betätigen.

9. Roboter nach einem der Ansprüche 1 bis 8, **dadurch gekennzeichnet, dass** die Abdeckung (7) und/oder das Strukturbauteil (6) wenigstens ein Leuchtmittel (18), insbesondere eine LED aufweist, das an eine Steuervorrichtung (3) des Roboters (1) angeschlossen ist, wobei die Steuervorrichtung (3) eingerichtet ist, im Falle eines auslösenden Betätigens der wenigstens einen Schaltleiste (8.1), ein den Auslösezustand der Schaltleiste (8.1) kennzeichnendes Signal durch Ansteuern des Leuchtmittels (18), insbesondere der LED am Roboterarm (2) optisch anzuzeigen.

## Claims

1. Robot comprising a robot arm (2), having a plurality of motor-driven joints (5) and a plurality of members (4) that each connect two adjacent joints (5.1, 5.2) of these driven joints (5) to one another, wherein at least one of these members (4) has a load-bearing structural component (6) that is designed to transmit forces and/or moments from an adjacent joint (5.1) to the other adjacent joint (5.2), wherein the structural component (6) is provided with at least one cover (7), which at least partially covers the structural component (6), and at least one contact sensor (8), wherein the at least one contact sensor (8) is in the form of a switching strip (8.1) that is arranged between the structural component (6) and the cover (7), and movable mounting means for mounting the cover (7) on the structural component (6), which mounting means are spring-preloaded in the basic position of the cover (7), are adjusted by an inherent elasticity of the switching strip (8.1), **characterized in that** the cover (7) has a central wall portion (7.3) that is designed to cover a first surface (6.1) of the structural component (6) and has at least two side wall portions (7.1, 7.2) that delimit the central wall portion (7.3) from opposite sides, wherein at least one first side wall portion (7.1) of the cover (7) partially or completely overlaps a second surface (6.2) of the structural component and at least one second side wall portion (7.2) of the cover (7) partially or completely overlaps a third surface (6.3) of the structural component (6) that is opposite the second surface (6.2) of the structural component (6), and the second surface (6.2) of the structural component (6) has at least one first protrusion (9.1) that cooperates with a first undercut (10.1) on the inner side of the first side wall portion (7.1) of the cover (7) in order to hold the cover (7) in a spring-preloaded manner in its basic position on the structural component (6) such that it is secured against detachment from the structural component (6) and/or the third surface (6.3) of the structural component (6) has at least one second protrusion (9.2) that cooperates with a second undercut (10.2) on the inner side of the second side wall portion (7.2) of the cover (7) in order to hold the cover (7) in a spring-preloaded manner in its basic position on the structural component (6) such that it is secured against detachment from the structural component (6).

2. Robot according to Claim 1, **characterized in that** the first protrusion (9.1) of the structural component (6) is formed by a first guide element (11.1) that is formed integrally on the structural component (6) or a first guide element (11.1) that is formed separately and fastened to the structural component (6), wherein the first undercut (10.1), which engages around the first guide element (11.1), of the cover (7) is formed by a first edge-folded portion (14.1) or first groove (13.1) of the first side wall portion (7.1), and/or the second protrusion (9.2) of the structural component (6) is formed by a second guide element (11.2) that is formed integrally on the structural component (6) or a second guide element (11.2) that is formed separately and fastened to the structural component, wherein the second undercut (10.2), which engages around the second guide element (11.2), of the cover (7) is formed by a second edge-folded portion (14.2) or second groove (13.2) of the second side wall portion (7.2).

3. Robot according to Claim 1, **characterized in that** the first protrusion (9.1) of the structural component (6) is formed by a first switching strip (8.1) that is fastened to the structural component (6), wherein the first undercut (10.1), which engages around the first switching strip (8.1), of the cover (7) is formed by a first edge-folded portion (14.1) of the first side wall portion (7.1), and/or the second protrusion (9.2) of the structural component (6) is formed by a second switching strip (8.1) that is fastened to the structural component (6), wherein the second undercut (10.2), which engages around the second switching strip (8.1), of the cover (7) is formed by a second edge-folded portion (14.2) of the second side wall portion (7.2).

4. Robot according to Claim 3, **characterized in that** the first switching strip (8.1) and/or the second switching strip (8.1) are/is connected to a control device (3) of the robot (1) that is designed to generate a signal that identifies a fault state if the cover (7) detaches from the structural component (6) and in the process the first edge-folded portion (14.1) of the first side wall portion (7.1) of the cover (7) actuates the first switching strip (8.1) and/or the second edge-folded portion (14.2) of the second side wall portion (7.2) of the cover (7) actuates the second switching strip (8.1).

5. Robot according to Claim 1, **characterized in that** the cover (7) has a central wall portion (7.3) that is designed to cover a first surface (6.1) of the structural component (6) and has at least two side wall portions (7.1, 7.2) that delimit the central wall portion (7.3) from opposite sides, wherein at least one first side wall portion (7.1) of the cover (7) partially or completely overlaps a second surface (6.2) of the structural component (6) and at least one second side wall portion (7.2) of the cover (7) partially or completely overlaps a third surface (6.3) of the structural component (6) that is opposite the second surface (6.2) of the structural component (6), and the second surface (6.2) of the structural component (6) has at least one first undercut (15.1) that cooperates with a first protrusion (16.1) that is formed on the inner side of the first side wall portion (7.1) of the cover (7) and is formed by a first switching strip (8.1) in order to hold the cover (7) in a spring-preloaded manner in its basic position on the structural component (6) such that it is secured against detachment from the structural component (6) and/or the third surface (6.3) of the structural component (6) has at least one second undercut (15.2) that cooperates with a second protrusion (16.2) that is formed on the inner side of the second side wall portion (7.2) of the cover (7) and is formed by a second switching strip (8.2) in order to hold the cover (7) in a spring-preloaded manner in its basic position on the structural component (6) such that it is secured against detachment from the structural component (6).

6. Robot according to Claim 5, **characterized in that** the first switching strip (8.1) and/or the second switching strip (8.1) are/is connected to a control device (3) of the robot (1) that is designed to generate a signal that identifies a fault state if the cover (7) detaches from the structural component (6) and in the process the first undercut (15.1) of the second surface (6.2) of the structural component (6) actuates the first switching strip (8.1) of the cover (7) and/or the second undercut (15.2) of the third surface (6.3) of the structural component (6) actuates the second switching strip (8.1) of the cover.

7. Robot according to one of Claims 1 to 6, **characterized in that** the at least one switching strip (8.1) is in the form of an electromechanical switch that has at least one electrical conductor that is embedded in an electrically insulating profile made of an elastic material.

8. Robot according to one of Claims 1 to 7, **characterized in that** the cover (7) has a central wall portion (7.3) that is designed to cover a first surface (6.1) of the structural component (6) and has at least two side wall portions (7.1, 7.2) that delimit the central wall portion (7.3) from opposite sides, wherein at least one first side wall portion (7.1) of the cover (7) partially or completely overlaps a second surface (6.2) of the structural component (6) and at least one second side wall portion (7.2) of the cover (7) partially or completely overlaps a third surface (6.3) of the structural component (6) that is opposite the second surface (6.2) of the structural component (6), and an inner side, which faces the structural component (6), of the cover (7), in particular the central wall portion (7.3), the first side wall portion (7.1) and/or the second side wall portion (7.2), has one or more protruding ribs (17) that are designed to bear against the at least one switching strip (8.1) in contact therewith in such a way that the one or more protruding ribs (17) actuates/actuate the at least one switching strip (8.1) if the cover (7) moves relative to the structural component (6) and/or an outer side, which faces the cover (7), of the structural component (6), in particular the first surface (6.1), the second surface (6.2) and/or the third surface (6.3), has one or more protruding ribs (17) that are designed to bear against the at least one switching strip (8.1) in contact therewith in such a way that the one or more protruding ribs (17) actuates/actuate the at least one switching strip (8.1) if the cover (7) moves relative to the structural component (6).

9. Robot according to one of Claims 1 to 8, **characterized in that** the cover (7) and/or the structural component (6) have/has at least one illuminant (18), in particular an LED, that is connected to a control device (3) of the robot (1), wherein the control device (3) is configured, if actuation of the at least one switching strip (8.1) is triggered, to optically display a signal identifying the triggered state of the switching strip (8.1) by activating the illuminant (18), in particular the LED on the robot arm (2).

## Revendications

1. Robot doté d'un bras de robot (2), présentant plusieurs articulations entraînées par moteur (5) et plusieurs membres (4) qui relient l'une à l'autre respectivement deux articulations voisines (5.1, 5.2) parmi ces articulations entraînées (5), dans lequel au moins l'un de ces membres (4) présente un composant structurel porteur (6) qui est réalisé pour transmettre des forces et/ou des couples d'une articulation voisine (5.1) à l'autre articulation voisine (5.2), dans lequel le composant structurel (6) est muni d'au moins un élément de couverture (7) recouvrant au moins partiellement le composant structurel (6) et d'au moins un capteur de contact (8), dans lequel ledit au moins un capteur de contact (8) est réalisé sous la forme d'une barrette de commutation (8.1) disposée entre le composant structurel (6) et l'élément de couverture (7), et un logement mobile de l'élément de couverture (7) sur le composant structurel (6), précontraint par ressort dans la position de base de l'élément de couverture (7), est réglé par une élasticité inhérente de la barrette de commutation (8.1),
**caractérisé en ce que** l'élément de couverture (7) présente une section de paroi centrale (7.3) qui est réalisée pour recouvrir une première surface (6.1) du composant structurel (6), et au moins deux sections de paroi latérale (7.1, 7.2) délimitant la section de paroi centrale (7.3) à partir de faces opposées, dans lequel au moins une première section de paroi latérale (7.1) de l'élément de couverture (7) chevauche partiellement ou complètement une deuxième surface (6.2) du composant structurel, et au moins une deuxième section de paroi latérale (7.2) de l'élément de couverture (7) chevauche partiellement ou complètement une troisième surface (6.3) du composant structurel (6), qui est opposée à la deuxième surface (6.2) du composant structurel (6), et la deuxième surface (6.2) du composant structurel (6) présente au moins une première saillie (9.1) qui coopère avec une première contre-dépouille (10.1) sur la face intérieure de la première section de paroi latérale (7.1) de l'élément de couverture (7) afin de maintenir l'élément de couverture (7) sous précontrainte par ressort dans sa position de base sur le composant structurel (6) de manière protégée contre tout détachement du composant structurel (6), et/ou la troisième surface (6.3) du composant structurel (6) présente au moins une deuxième saillie (9.2) qui coopère avec une deuxième contre-dépouille (10.2) sur la face intérieure de la deuxième section de paroi latérale (7.2) de l'élément de couverture (7) afin de maintenir l'élément de couverture (7) sous précontrainte par ressort dans sa position de base sur le composant structurel (6) de manière protégée contre tout détachement du composant structurel (6).

2. Robot selon la revendication 1, **caractérisé en ce que** la première saillie (9.1) du composant structurel (6) est formée par un premier élément de guidage (11.1) façonné d'un seul tenant sur le composant structurel (6) ou par un premier élément de guidage (11.1) réalisé séparément et fixé au composant structurel (6), dans lequel la première contre-dépouille (10.1) de l'élément de couverture (7), entourant le premier élément de guidage (11.1), est formée par une première section repliée (14.1) ou une première rainure (13.1) de la première section de paroi latérale (7.1), et/ou la deuxième saillie (9.2) du composant structurel (6) est formée par un deuxième élément de guidage (11.2) façonné d'un seul tenant sur le composant structurel (6) ou par un deuxième élément de guidage (11.2) réalisé séparément et fixé au composant structurel, dans lequel la deuxième contre-dépouille (10.2) de l'élément de couverture (7), entourant le deuxième élément de guidage (11.2), est formée par une deuxième section repliée (14.2) ou une deuxième rainure (13.2) de la deuxième section de paroi latérale (7.2).

3. Robot selon la revendication 1, **caractérisé en ce que** la première saillie (9.1) du composant structurel (6) est formée par une première barrette de commutation (8.1) fixée au composant structurel (6), dans lequel la première contre-dépouille (10.1) de l'élément de couverture (7), entourant la première barrette de commutation (8.1), est formée par une première section repliée (14.1) de la première section de paroi latérale (7.1), et/ou la deuxième saillie (9.2) du composant structurel (6) est formée par une deuxième barrette de commutation (8.1) fixée au composant structurel (6), dans lequel la deuxième contre-dépouille (10.2) de l'élément de couverture (7), entourant la deuxième barrette de commutation (8.1), est formée par une deuxième section repliée (14.2) de la deuxième section de paroi latérale (7.2).

4. Robot selon la revendication 3, **caractérisé en ce que** la première barrette de commutation (8.1) et/ou la deuxième barrette de commutation (8.1) sont connectées à un dispositif de commande (3) du robot (1) qui est réalisé pour produire un signal qui caractérise un état de défaut lorsque l'élément de couverture (7) se détache du composant structurel (6) et à cette occasion, la première section repliée (14.1) de la première section de paroi latérale (7.1) de l'élément de couverture (7) actionne la première barrette de commutation (8.1) et/ou la deuxième section repliée (14.2) de la deuxième section de paroi latérale (7.2) de l'élément de couverture (7) actionne la deuxième barrette de commutation (8.1).

5. Robot selon la revendication 1, **caractérisé en ce que** l'élément de couverture (7) présente une section de paroi centrale (7.3) qui est réalisée pour recouvrir une première surface (6.1) du composant structurel (6) et présente au moins deux sections de paroi latérale (7.1, 7.2) délimitant la section de paroi centrale (7.3) à partir de faces opposées, dans lequel au moins une première section de paroi latérale (7.1) de l'élément de couverture (7) chevauche partiellement ou complètement une deuxième surface (6.2) du composant structurel (6), et au moins une deuxième section de paroi latérale (7.2) de l'élément de couverture (7) chevauche partiellement ou complètement une troisième surface (6.3) du composant structurel (6), qui est opposée à la deuxième surface (6.2) du composant structurel (6), et la deuxième surface (6.2) du composant structurel (6) présente au moins une première contre-dépouille (15.1) qui coopère avec une première saillie (16.1) réalisée sur la face intérieure de la première section de paroi latérale (7.1) de l'élément de couverture (7) et qui est formée par une première barrette de commutation (8.1) pour maintenir l'élément de couverture (7) sous précontrainte par ressort dans sa position de base sur le composant structurel (6) de manière protégée contre tout détachement du composant structurel (6), et/ou la troisième surface (6.3) du composant structurel (6) présente au moins une deuxième contre-dépouille (15.2) qui coopère avec une deuxième saillie (16.2) réalisée sur la face intérieure de la deuxième section de paroi latérale (7.2) de l'élément de couverture (7) et qui est formée par une deuxième barrette de commutation (8.1) pour maintenir l'élément de couverture (7) sous précontrainte par ressort dans sa position de base sur le composant structurel (6) de manière protégée contre tout détachement du composant structurel (6).

6. Robot selon la revendication 5, **caractérisé en ce que** la première barrette de commutation (8.1) et/ou la deuxième barrette de commutation (8.1) sont connectées à un dispositif de commande (3) du robot (1) qui est réalisé pour produire un signal qui caractérise un état de défaut lorsque l'élément de couverture (7) se détache du composant structurel (6) et à cette occasion, la première contre-dépouille (15.1) de la deuxième surface (6.2) du composant structurel (6) actionne la première barrette de commutation (8.1) de l'élément de couverture (7) et/ou la deuxième contre-dépouille (15.2) de la troisième surface (6.3) du composant structurel (6) actionne la deuxième barrette de commutation (8.1) de l'élément de couverture (7).

7. Robot selon l'une quelconque des revendications 1 à 6, **caractérisé en ce que** ladite au moins une barrette de commutation (8.1) est réalisée comme un commutateur électromécanique qui présente au moins un conducteur électrique qui est incorporé dans un profilé électriquement isolant d'un matériau élastique.

8. Robot selon l'une quelconque des revendications 1 à 7, **caractérisé en ce que** l'élément de couverture (7) présente une section de paroi centrale (7.3) qui est réalisée pour recouvrir une première surface (6.1) du composant structurel (6) et au moins deux sections de paroi latérale (7.1, 7.2) délimitant la section de paroi centrale (7.3) à partir de faces opposées, dans lequel au moins une première section de paroi latérale (7.1) de l'élément de couverture (7) chevauche partiellement ou complètement une deuxième surface (6.2) du composant structurel (6), et au moins une deuxième section de paroi latérale (7.2) de l'élément de couverture (7) chevauche partiellement ou complètement une troisième surface (6.3) du composant structurel (6), qui est opposée à la deuxième surface (6.2) du composant structurel (6), et une face intérieure de l'élément de couverture (7), tournée vers le composant structurel (6), en particulier la section de paroi centrale (7.3) de la première section de paroi latérale (7.1) et/ou de la deuxième section de paroi latérale (7.2), présente une ou plusieurs nervures saillantes (17) qui sont réalisées pour être adjacentes en contact à ladite au moins une barrette de commutation (8.1) de telle sorte que lors d'un mouvement de l'élément de couverture (7) par rapport au composant structurel (6), ladite une ou les plusieurs nervures saillantes (17) actionnent ladite au moins une barrette de commutation (8.1), et/ou une face extérieure du composant structurel (6), tournée vers l'élément de couverture (7), en particulier la première surface (6.1), la deuxième surface (6.2) et/ou la troisième surface (6.3), présente une ou plusieurs nervures saillantes (17) qui sont réalisées pour être adjacentes en contact à ladite au moins une barrette de commutation (8.1) de telle sorte que lors d'un mouvement de l'élément de couverture (7) par rapport au composant structurel (6), ladite une ou les plusieurs nervures saillantes (17) actionnent ladite au moins une barrette de commutation (8.1).

9. Robot selon l'une quelconque des revendications 1 à 8, **caractérisé en ce que** l'élément de couverture (7) et/ou le composant structurel (6) présentent au moins un moyen lumineux (18), en particulier une LED, qui est connecté à un dispositif de commande (3) du robot (1), dans lequel le dispositif de commande (3) est conçu, dans le cas d'un actionnement de déclenchement de ladite au moins une barrette de commutation (8.1), pour indiquer optiquement un signal qui caractérise l'état de déclenchement de la barrette de commutation (8.1) par un pilotage du moyen lumineux (18), en particulier de la LED, sur le bras de robot (2).
